# EUROPEAN PATENT APPLICATION

(11) **EP 2 023 684 A1**
(43) Date of publication of application: **11.02.2009**
(21) Application number: 07253019.9
(22) Date of filing: 01.08.2007
(51) Int. Cl.: H04W 76/02, H04M 1/04, H04M 1/253, H04M 1/725, H04L 29/08

(54) **Communications terminal intended for use with VoIP services.**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A communications terminal (20) intended for use with "voice over internet protocol" (VoIP) services by users who are not computer-literate is arranged to switch between on line (available) and off line (not available) conditions by a simple operation, and has a series of illuminated keys (7) capable of dedication to respective correspondents, who also subscribes to a VoIP service. The illumination of the keys is arranged to indicate the online/offline/busy status of the correspondent, and pressing the key establishes connection to that correspondent.

## Description

This invention relates to communications terminals.

Many enhanced services are provided by communications service providers in addition to the basic telephone service. One particular facility which is becoming available is "Voice over Internet Protocol" (VoIP). This is a facility which allows voice calls to be made over a packet network such as the Internet. Many potential users of this service may have no desire to use any other Internet facilities, or to obtain a general purpose computer, and so there is scope for development of dedicated VoIP handsets, capable of operation with an internet connection, typically through a wireless hub to allow cordless capability.

One advantage of Internet-based services is that users can determine each others' current activity, at a very basic level. In particular, the network is aware of whether a user is currently on line and, if so, whether a call is in progress. This awareness can be used to indicate to other users whether the user is available to take a call. This facility would be particularly useful for users who may be available at irregular or unpredictable times, so that they can indicate, by whether they are on line or not, whether they currently wish to be disturbed by incoming calls.

Whilst VoIP is an attractive service, the user may nevertheless also need the capabilities of the conventional telephone service to communicate with non-VoIP users. Some VoIP systems cannot handle emergency service calls (112, 999, 911 depending on country) as the user's location cannot be readily identified using Internet access. For these reasons VoIP-capable handsets are usually also capable of operation on the traditional network.

Many enhanced services require specialised terminals. A difficulty with any specialised terminal is that the user is often required to remember a sequence of key strokes in order to operate these enhanced services. However, many of the most vulnerable members of society, who would benefit most from such services, are unfamiliar with computers and would find it difficult to learn and remember complex functions, and may also find the operation of a keypad difficult, either through lack of dexterity, poor eyesight, or inability or unwillingness to learn complex tasks. It is the intention of this invention to provide the means to perform a simple and easily-learned process to operate such an enhanced service, specifically setting up personal calling lists. In particular, it is desirable that the handset also allows operation in the conventional manner to which such users are accustomed.

According to the present invention, there is provided a communications terminal having means for connection to a network, means for generating an indication of its operative condition, one or more control means each operable to control communication with a respective corresponding terminal, receiving means for receiving indications of the operative conditions of the corresponding terminals, and means associated with each control means and co-operating with the receiving means for displaying an indication of the operative condition of the respective corresponding terminal. In the preferred embodiment, the operative condition that is monitored and displayed includes an indication as to whether the terminal is currently in operative connection to the network. The preferred embodiment also includes an indication as to whether the terminal is currently in use. The first indication may be indicative of whether the user is present and willing to receive calls, whilst the second indication is indicative of whether the user is currently engaged on a call. These conditions may be represented by an offline state, an online state, and an in use state.

The control means preferably has means for selecting a corresponding terminal for which it requires such data to be provided. This may be achieved by transmitting a signal to the network when in communication with the desired corresponding terminal, indicative of its selection as a corresponding terminal. The control means may have means for controlling designation of another user as a correspondent such that it may be so designated only if a confirmation signal is received from the intended corresponding terminal.

The terminal is intended for use with a call handling system comprising a server to which a plurality of user terminals can be connected by a communications network, the server having means to determine which terminals are currently connected to the network, means to transmit to each terminal a signal indicative of other terminals connected to the network, and each terminal having means to generate a display to its user indicative of which other terminals are so connected. Each terminal may generate a list of corresponding terminals for which it requires data relating to their operative states. The list may be generated by transmitting a signal to the server from the user terminal when in communication with the desired corresponding terminal. The server may be arranged to permit a terminal to be added to a user's list of correspondents only if the desired corresponding terminal transmits a confirmation signal. The network may be configured to operate with general purpose computers, but the handset of the present invention allows simple operation of a VoIP service for potential users who do not have a general purpose computer, and are unable or unwilling to learn how to use one. In particular, the use of a separate dedicated control means and associated indicator for each correspondent allows for simple operation. The individual control means may be embodied as keys, the indicators being means for illuminating the respective keys to indicate the status of the user to whom that key relates.

Embodiments of the invention will now be described, by way of non-limiting example and with reference to the drawings, in which
Figure 1 illustrates a telephone handset according to the invention
Figure 2 is another view of the handset of Figure 1
Figure 3 is a view of the handset of Figures 1 and 2, together with a wireless hub in a first operative condition
Figure 4 is a view of the handset and hub of Figure 3 in a second operative condition
Figure 5 illustrates the interface between the handset and hub of Figures 3 and 4
Figure 6 is a detail illustrating an alternative configuration for the interface between the handset and hub
Figure 7 is a schematic illustration of a number of devices according to the invention connected together through a network
Figure 8 is a flow diagram illustrating the information flows between the handset and a network-based server.

This embodiment also incorporates the invention discussed in another patent application filed on the same date as the present application, entitled "telephone handset" and having applicant's reference B31396.

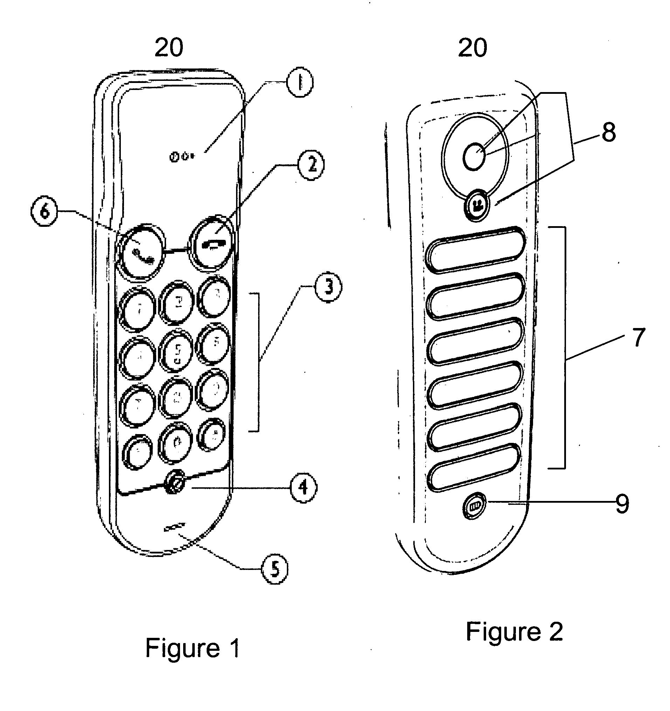

The handset 20 depicted in Figures 1 and 2 has two faces. The face shown in Figure 1 has a conventional layout for a cordless telephone, having a loudspeaker 1, an "on-hook" key 2, a keypad 3, a menu key 4 for controlling auxiliary functions, a microphone 5 and an "off-hook" key 6. The reverse face has a set of contact keys 7, together with controls for further functions, such as a video camera 8, and a battery state key 9. The two faces have contrasting colours so that they are readily distinguishable.

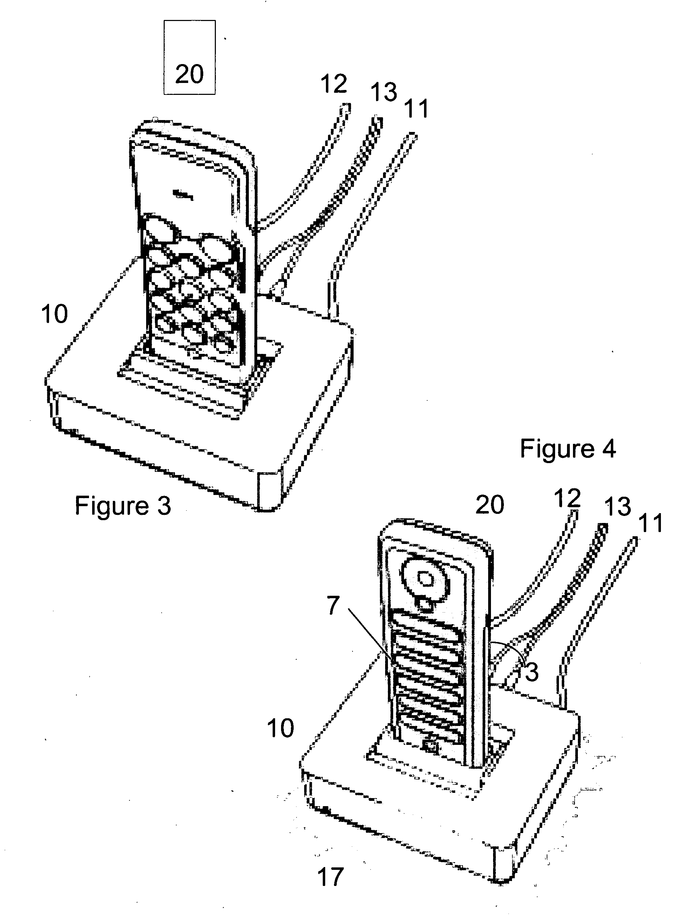

The handset 20 has the capability of operating both as a conventional cordless telephone, by co-operation over a wireless connection to a base station connected to a conventional telephone connection, and also as a "VoIP" telephone, by co-operation over a wireless connection to a wireless "hub" connected to the Internet. In this embodiment, the base station and the hub are both embodied in the same base unit 10 depicted in Figures 3, 4 and 5. The base unit 10 has a communications management system 16 having the capability for wireless connection to the communications system 21 of the handset 20 in both wireless modes, and has wired connections 11, 12, 13, respectively to a communications network 11, a power supply 12, and peripheral equipment such as a television set 13. In this embodiment the same physical communications infrastructure 11 is used for both conventional telephony and the Internet, the hub 10 incorporating filters to segregate signals transmitted using the two networks. However, separate physical connections may be used.

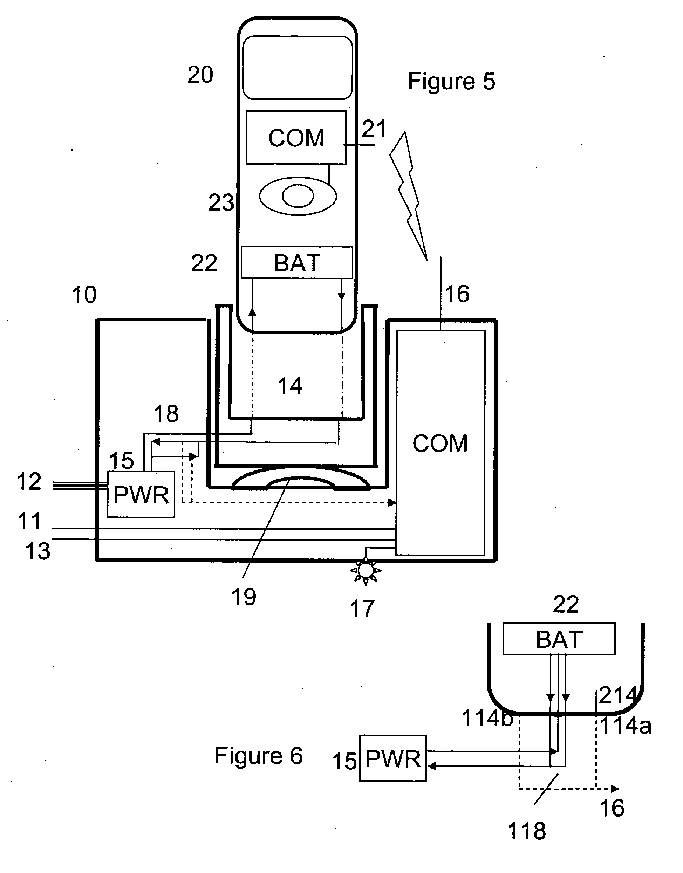

The hub 10 incorporates a docking station 14 into which the handset 20 can be inserted. Whilst in the docking station the handset is connected to the power supply 12 through a power management system 15 which includes a transformer suitable to charge the battery 22 of the handset. The docking station 14 is designed such that the handset 20 can be inserted in either of two different alignments, as shown in Figures 3 and 4. The docking station includes a detector to indicate which alignment is in use and transmit a signal to the communications management system 16 accordingly. In Figure 5 the detector is shown as a diode bridge 18 in the power management system 15, indicating the positions of the battery's poles relative to the power supply, whilst in the alternative arrangement shown in Figure 6 the power connection 118 is symmetrical (e.g. a coaxial connection) allowing connection either way round, and a separate offset contact 214 in the handset connects with one of two terminals 114a, 114b according to its orientation in the docking station 14, thereby allowing its detection by the communications management system 16.

A light 17 is illuminated when the handset is in one orientation (Figure 4) and not when it is in the other orientation (Figure 3)

The handset 20 includes a position sensor 23, which is arranged to detect the orientation of the handset. This may be a gravity sensor, such as a switch contact which moves under its own weight between an open position and a closed position as the handset is inverted, or it may be a pressure switch in one face of the handset 20 to detect whether the handset is lying with that face in contact with a surface. The output from this sensor 23 is transmitted to the hub over the wireless connection 21, 16. However if the handset 20 is currently located in the docking station 14, this output is over-ridden: This ensures that spurious information is not presented, for example due to contact between the pressure switch and the docking station.

The orientation of the handset, either in the docking station or placed on a surface, controls the connection to the Internet. When the handset 20 is placed with the conventional face (Figure 1) uppermost, the position sensor 23 transmits a first signal to the communications management system 16 which responds by taking the connection 11 to the Internet off line. If the handset is then turned over, so that the face depicted in Figure 2 is uppermost, the position sensor 23 transmits a second signal to the communications management system 16 which responds by establishing the connection 11 to the Internet.

Similarly, if the handset 10 is placed in the docking station in the orientation having the conventional face depicted in Figure 1 facing , as shown in Figure 3, the detector 18 transmits a third signal to the communications management system 16 which responds by taking the connection 11 to the Internet off line. If the handset is then reversed in the docking station 14, so that the face depicted in Figure 2 is facing forward (as shown in Figure 4) the detector 18 transmits a fourth signal to the communications management system 16, which responds by establishing the connection 11 to the Internet. If none of the first to fourth signals are received by the communications system, it is likely that the handset is either being handled, and therefore in use, or switched off. Both these conditions can be detected by normal paging of the handset.

By simply changing the position of the handset, the user can cause the connection to go on line and off line. This can be used as a very simple indication to other users as to whether the user is currently contactable. The positioning of the handset, and in particular the visibility or otherwise of the contact keys 7, also acts as a visual prompt to the user himself as to whether the handset is in the condition in which his correspondents can contact him. The base unit also has a light 17 illuminated when the user is on line and contactable.

When a call is in progress, the communication management system 16 identifies the handset as on line and in use, over-riding any indications from the position sensors.

The handset therefore generates an indication of the current status of the user without the user being required to perform any complicated and difficult-to-remember keystrokes. The special service (connection to the Internet) is achieved simply by placing the handset in a position in which the keys applicable to the special service are visible. Reversing its position so that the keys are concealed deactivates the service.

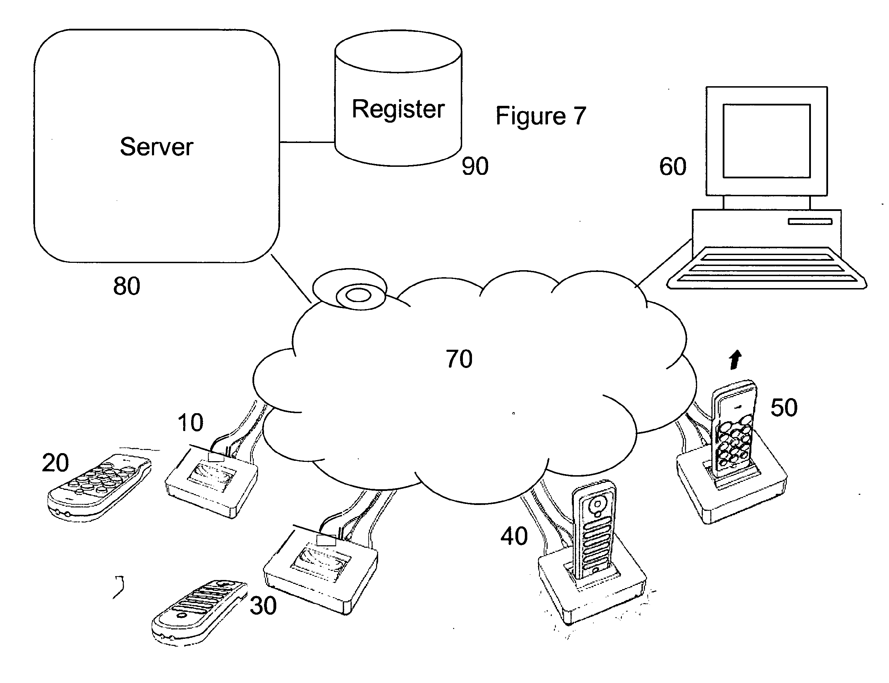

Figure 7 shows a number of user terminals 10/20, 30, 40, 50, 60 each connected by way of the Internet 70 to a network server 80. The network server is associated with a register 90 of users, which records which users are currently on line. Four of the user terminals 10/20, 30, 40, 50 are of the type described above, whilst a fifth terminal 60 is of conventional type. The first user terminal has the handset 20 removed from its docking station in the hub 10, and placed in the off line position with the conventional keyboard uppermost. The second user terminal, generally indicated by the reference numeral 30, also has the handset removed from its docking station in the hub, but this time placed in the online position with the contact keys uppermost. The third user terminal, generally indicated by the reference numeral 40, has the handset inserted in its docking station in the hub in the on line position with the contact keys foremost. The fourth user terminal, generally indicated by the reference numeral 50, also has the handset inserted in its docking station in the hub, but placed in the off line position, with the conventional keys foremost.

The contact keys 7 on the handset 20, only visible when the user is on line, may be used to identify selected users, herein referred to as correspondents. The user programmes the correspondents' contact details (VoIP identities) into the handset using the conventional keypad 5, such that each contact key 7 corresponds to a selected correspondent. Alternatively, it may be done during a call to the correspondent. The server 80 may be configured to arrange that two users may only be placed on each others' contact lists by mutual consent, e.g. by each operating a contact key on their own handset simultaneously, during a call connected between them.

When a user is on line, the register 90 is interrogated periodically to determine which of the users are currently on line, and the server reports to each user which of its correspondents are on line. The terminal 10 reponds by illuminating the respective contact key when a correspondent is on line and therefore contactable. Further indications may be provided to indicate other conditions, such as on line but engaged on a call, or to indicate that one of the correspondents is making a call to the user. The different indications may be different colours (e.g. yellow for engaged and green for available) or intensities, or may include a flashing condition (e.g. to indicate an incoming call).

As will be noted from Figure 7, (correspondent 60) it is not necessary for all the correspondents to have handsets of the type described herein - the handsets are compatible with existing VoIP systems and the communications management system 16 of the hub 10 simply transmits and receives indications as to whether the user and the correspondents are currently on line in the same way as any conventional subscriber to a VoIP system such as the terminal 60. One, some, or all of the user's correspondents may use conventional general-purpose computers to access the VoIP network, having users represented by icons on a display screen which can be activated by mouse clicks in the conventional way. The device 10, 20 of the invention allows users who have no need for a general-purpose computer, nor the desire to learn how to use one, to access VoIP services. The difference lies in that the means of generation of such indications by the terminal 10, 20 for transmission to the server 80, and the means by which the terminal indicates responses to any such indications received from the server 80, are by means of physical illuminated keys. This is more intuitive for those unfamiliar with computers, than the process favoured by the computer-literate of using a manual input device ("mouse") to control the position of an on-screen cursor and accessing functions represented by on-screen "icons" by pressing a key on the "mouse" when the positions of the cursor and the "icon" representing the required function coincide on the screen. It is also a simpler physical operation for those with limited manual dexterity or visual acuity.

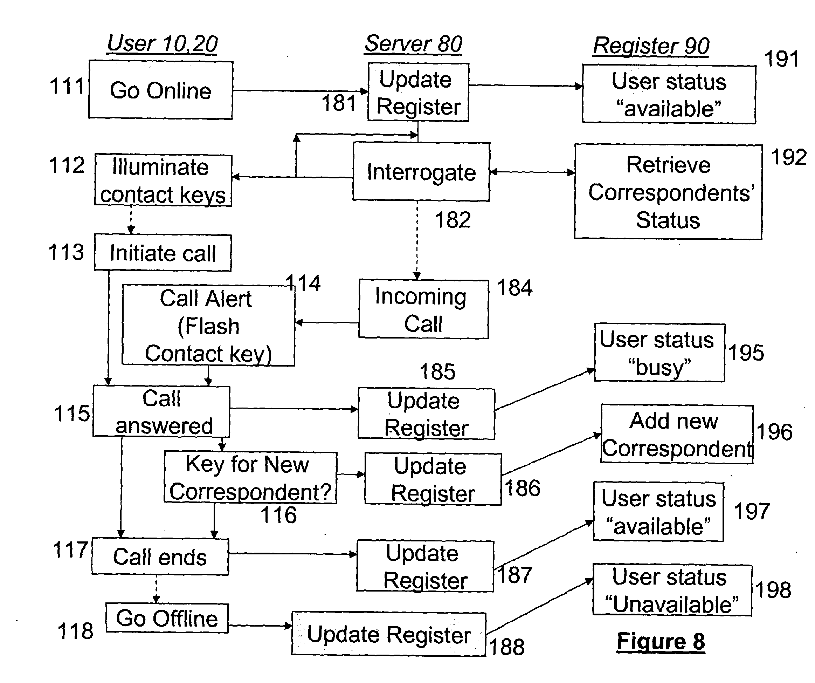

The operation of the hub 10 and handset 20, in conjunction with the server 80 and associated register 90, will now be described with reference to Figure 8.

When a user reverses the position of his handset 20 so that the contact keys 7 are visible, this causes the hub 10 to set up an internet connection with the server 80 (step 111). As part of this process, the server 80 updates the register 90 (step 181) to indicate that the user's connection is now online, and the user is available to be contacted (step 191).

Whilst a user is on line, the server 80 periodically retrieves from the register 90 the status (online, offline, busy) of each correspondent (e.g. 30) recorded for the user in the register (step 192) and reports this status to the user terminal 20 (182). The user terminal 20 responds by illuminating each contact key 7 according to the status of its respective correspondent (e.g. green online, yellow busy, unlit offline) - step 112.

If the server detects an incoming call (184) it transmits a call alert 114 to the user terminal 20. If the call is from a correspondent 30 the relevant contact key flashes, otherwise a standard call alert (ring tone) is used. Calls may also be initiated by the user (step 113). Whilst a call is in progress (step 115) the server detects this and updates the register 90 (step185) so that the user's status is changed to "busy" (step 195).

If the party with which the present call is connected is not already one of the user's correspondents, the user may add the other party to his correspondent list by pressing one of the contact keys (step 116). This causes a signal 186 to be transmitted to the server 80 to add the new correspondent to the register (step 196). This will overwrite the correspondent currently associated with that key, if any, and a warning may be generated to avoid unintentional overwriting. Provision may be made for users to be only able to add a correspondent if the corresponding user consents - this can be achieved by requiring both parties to operate a contact key on their respective handsets simultaneously, causing each user to be added to the other's correspondent list.

At the end of a call (step 117) the server again updates the register (step 187), reverting both users' status to online - "available".

If the user wishes to be unavailable, for example because he is going off the premises, or wants to sleep, he can reverse the terminal 20 so that the contact keys are not visible. This causes the base station 10 to close down the online connection (step 118). The server, detecting this, updates the register 90 (step 188) which records the user status as "unavailable" 198, so that when the register 90 is next interrogated by the server 80, it will report to any correspondents who are currently on line that the user is now off line.

As shown, the docking station 14 is movably mounted in the hub unit 10 using a pivotable mounting 19, to allow a limited degree of freedom of alignment of the handset 20 in the hub 10. This allows orientation of a video camera 8 incorporated in the handset to be adjusted whilst supported by the docking station.

The hub 10 may be connected to an ancillary device such as a television set through a connection 13 to allow visual information such as data or images received over the Internet connection to be displayed on the television screen, rather than relying on a screen incorporated in the handset, whose size would be necessarily limited by the dimensions of the handset itself. This, in conjunction with the video camera 8, facilitates the provision of video telephony over the Internet connection.

## Claims

1. A communications terminal having means for connection to a network, means for generating an indication of its operative condition, one or more control means each operable to control communication with a respective corresponding terminal, receiving means for receiving indications of the operative conditions of the corresponding terminals, and means associated with each control means and co-operating with the receiving means for displaying an indication of the operative condition of the respective corresponding terminal.

2. A communications terminal according to claim 1, wherein the operative condition that is monitored and displayed includes an indication as to whether the terminal is currently in operative connection to the network.

3. A communications terminal according to claim 1 or claim 2, wherein the operative condition is monitored and displayed is an indication as to whether the terminal is currently in use.

4. A communications terminal according to claim 1, claim 2 or claim 3, wherein the or each control means has means for selecting a corresponding terminal for which it requires such data to be provided.

5. A communications terminal according to claim 4, wherein the control means has means for transmitting a signal to the network when in communication with the desired corresponding terminal indicative of its selection as a corresponding terminal.

6. A communications terminal according to claim 5, wherein the control means has means for controlling designation of another user as a correspondent such that it may be so designated only if a confirmation signal is received from the intended corresponding terminal.
